# EUROPÄISCHE PATENTSCHRIFT

(11) **EP 4 153 090 B1**
(45) Veröffentlichungstag und Bekanntmachung des Hinweises auf die Patenterteilung: **27.11.2024**
(21) Anmeldenummer: 21726311.0
(22) Anmeldetag: 10.05.2021
(51) Int. Cl.: A61C 19/04

(54) **VORRICHTUNG ZUR MESSUNG VON MECHANISCHEN UND THERMISCHEN BELASTUNGEN AN EINEM ROTIERENDEN INSTRUMENT**
DEVICE FOR MEASURING MECHANICAL AND THERMAL STRESSES ON A ROTATING INSTRUMENT
DISPOSITIF DE MESURE DE CONTRAINTES MÉCANIQUES ET THERMIQUES SUR UN INSTRUMENT ROTATIF

(30) Priorität: 20.05.2020 DE 102020113649
(43) Veröffentlichungstag der Anmeldung: 29.03.2023
(73) Patentinhaber: Universität Rostock, 18055 Rostock (DE)
(72) Erfinder: STUBBE, Marco, 18239 Satow OT Clausdorf (DE); BADER, Rainer, 73102 Birenbach (DE); PAHNCKE, Dieter, 18059 Rostock (DE)
(74) Vertreter: Grünbaum, Annekathrin
(86) Internationale Anmeldenummer: PCT/EP2021/062339
(87) Internationale Veröffentlichungsnummer: WO 2021/233721

(56) Entgegenhaltungen:
- WO-A1-2018/165390
- WO-A1-2018/165390
- GB-A- 2 438 877
- GB-A- 2 438 877
- US-A1- 2009 259 244
- US-A1- 2009 259 244

## Beschreibung

Die vorliegende Erfindung betrifft das Gebiet der Medizintechnik und kann für endodontische Handstücke mit rotierenden chirurgischen Instrumenten angewendet werden. Die erfindungsgemäße Vorrichtung ermöglicht es, die thermischen und/oder mechanischen Belastungen von rotierenden Instrumenten mittels Impedanz-Messverfahren in Echtzeit zu bestimmen.

In der Zahnmedizin wird zum langfristigen Erhalt eines erkrankten und bakteriell infizierten Zahns in der Regel eine endodontische oder Wurzelkanal-Behandlung vorgenommen. Bei der Wurzelbehandlung wird der geschädigte Zahn eröffnet und der Wurzelkanal anschließend mit Hilfe einer Wurzelkanalfeile vergrößert und aufbereitet. Bei dieser Therapie kommen rotierende Wurzelkanalfeilen aus Form-Gedächtnis-Legierungen (FGL), im allgemeinen Nickel-Titan-Legierungen, zum Einsatz, bei denen aufgrund der natürlichen Krümmung der Wurzelkanäle Reibmomente auftreten, welche Torsionsbelastungen auf die Feile ausüben. Dadurch kann es während der Behandlung zu einer unerwünschten Instrumentenverklemmung im Wurzelkanal kommen. Während des Arbeitsvorganges entsteht Reibung, welche zu einem Temperaturanstieg in der Feile führt. Hierdurch kann es zu einem Phasenübergang in den Nickel-Titan-Instrumenten kommen, was zu plastischen Verformungen und einer Erhöhung der Bruchgefahr der Feile führt. Insbesondere bei der zyklischen Ermüdung kommt es durch die Rotation des Instruments zu Biegebeanspruchung, lokaler Härtung, Versprödung des Materials und Ermüdung desselben. Von außen sind diese Ermüdungserscheinungen nicht zu erkennen.

Es gibt Vorrichtungen, welche die Wahrscheinlichkeit einer Materialermüdung anzeigen oder berechnen. So wird in EP 1400217 A1 ein Verfahren und eine Vorrichtung zur Messung der Ermüdung von zahnärztlichen Instrumenten offenbart, bei der die Anzahl der Zyklen, die das zahnärztliche Instrument ausgeführt hat, gemessen und mit einem Zielwert verglichen wird. Daraus wird eine Schätzung der Wahrscheinlichkeit eines Instrumentenbruchs abgeleitet und auf einem Display angezeigt. Die Wahrscheinlichkeitsberechnung wird durch die Art des endodontischen Instruments und die Krümmung des Wurzelkanals beeinflusst. Die Messung erfolgt u.a. über die Anzahl von Zyklen der Drehung eines Motors, der das zahnärztliche Instrument in Drehung versetzt. Dazu wird der Strom oder die Leistung am Motor gemessen. Die Anzahl der Zyklen der Drehung des endodontischen Instruments wird während seiner Lebensdauer gespeichert und mit einem entsprechenden Zielwert für die Bruchgefahr verglichen, wobei dieser Wert die Bruchwahrscheinlichkeit des zahnärztlichen Instruments anzeigt.

EP 1937180 B1 betrifft ein Verfahren und eine Vorrichtung zur Überwachung und Identifizierung eines medizinischen Instruments. Die Vorrichtung umfasst ein elektronisches Etikett (allgemein als TAG bezeichnet), das in den Griff des Instruments integriert ist. Das Etikett kommuniziert über Radiofrequenz mit der Software eines Motors, der das Instrument über ein Lese-/Schreib-Schnittstellenmodul antreibt. Die vom Motor übertragenen Daten werden im TAG ausgewertet, wobei die Antriebsmotor-Software den Antriebsmotor entsprechend der zyklischen Ermüdung des zahnärztlichen Instruments steuert und erforderlichenfalls den Motor stoppt und ein akustisches oder optisches Signal abgibt, wenn die zyklische Ermüdung überschritten wird und die Verwendung des Instruments ein Risiko für den Patienten darstellt.

In EP 2215981 A1 wird ein chirurgisches Elektrowerkzeug beschrieben, welches eine Betätigungsbaugruppe aufweist, die einen Kraftsensor sowie einen Schalter umfasst. Der Kraftsensor ist zur Ermittlung einer vom Benutzer aufgebrachten Betätigungskraft vorgesehen, und der Schalter wird durch die Betätigungskraft von einem ersten Schaltzustand in einen zweiten Schaltzustand überführt. Eine kombinierte Auswertung des Kraftsensorsignals und des Schaltzustands ermöglicht beispielsweise eine Plausibilitätsprüfung zur Erhöhung der Funktionssicherheit des Elektrowerkzeugs.

Ansätze, die auf einer Impedanzmessung basieren, werden z.B. in der Zahnbehandlung zur Ermittlung der Eindringtiefe von Wurzelkanalfeilen genutzt, wobei während der Rotation des zahnärztlichen Instruments eine Impedanzmessung vorgenommen wird und dadurch die apikale (untere) Öffnung des Wurzelkanals bestimmt wird.

So wird in US 6520773 B1 eine endodontische Feile offenbart, welche an ihrem distalen Ende einen elektrisch leitenden Schaft mit einem unteren Schneidabschnitt und einen elektrisch nicht leitenden Griff umfasst, der einen elektrisch leitenden Kopf am proximalen Ende des Schaftes hat. Der Griff befindet sich zwischen dem Kopf und dem distalen Ende. Der elektrisch leitende Kopf dient zum elektrischen Anschluss an ein Instrument zur Messung der Innenkavität des Zahnes.

Ein zahnärztliches Bohrsystem mit elektrischer Impedanzmessung, in WO 2018165390 A1 offenbart, zeigt an, wenn sich ein Bohrer des Bohrsystems der Kortikalis-Spongiosa oder den Grenzflächen zwischen Knochen und Weichgewebe nähert. Das Bohrsystem verfügt über einen zahnärztlichen Bohrerhandgriff mit einem Kanülenlager, das elektrisch an einen Bohrer gekoppelt ist, wobei der Bohrer einen elektrisch isolierten und einen freiliegenden Teil aufweist. Das Kanülenlager ist mit einer elektrischen Impedanzspektroskopie-Sensorvorrichtung gekoppelt, die so konfiguriert ist, dass sie die Impedanz zwischen dem Kanülenlager des zahnärztlichen Bohrhandgerätes und einer Grundplatte misst, und ein Verarbeitungssystem unterscheidet, wann sich der Bohrer des Bohrsystems der Kortikalis, der Spongiosa oder den Knochen-Weichgewebe-Grenzflächen nähert.

Ebenso offenbart DE 10303964 A1 (US 2006/241628 A1) eine medizinische Bohrvorrichtung zum Bohren von menschlichem oder tierischem Gewebe, welche einen Bohrer mit einer Bohrungselektrode und einer Gegenelektrode aufweist. Beide Elektroden werden durch ein Widerstandsmessgerät aufgeladen und der elektrische Widerstand des Gewebes, vorzugsweise die Impedanz, zwischen dem Bohrer und der Gegenelektrode werden gemessen. Mit Hilfe einer Überwachungseinrichtung erhält der Chirurg Informationen über die Art des jeweiligen Gewebes und die Bohrtiefe. Ein ähnlicher Ansatz wird auch in US 2014/094808 A1 verfolgt.

Der Stand der Technik beschreibt außerdem diverse Schutzrechte, welche die Temperatur eines rotierenden chirurgischen Instruments anzeigen. So betrifft US 6786897 B2 ein Temperaturanzeigeelement zur Befestigung an einem angetriebenen chirurgischen Instrument, um eine visuelle Anzeige der Temperatur von mindestens einem Teil des chirurgischen Instruments bereitzustellen. Das thermochrome Element liefert eine visuelle Anzeige der Temperatur eines Teils des Instruments, wenn die Temperatur einen vorgegebenen Wert überschreitet.

EP 2524666 B1 offenbart ein medizinisches, insbesondere dentales, Handstück mit einer Temperaturmessvorrichtung zur berührungslosen Messung der Temperatur des Handstücks oder eines Teils des Handstücks durch Detektion von elektromagnetischer Strahlung, insbesondere von Wärmestrahlung. Alternativ kann eine elektrische Temperaturmessvorrichtung erfolgen.

Ein in GB 2438877 A offenbartes tragbares Elektrowerkzeug umfasst einen Motor, der zum Antrieb eines Schneidewerkzeugs konfiguriert ist. Das genannte Schneidwerkzeug hat einen Sensor zur Erfassung einer Umgebungscharakteristik (z.B. Temperatur). Dieser Sensor kann drahtlos mit einem Controller kommunizieren, um das Elektrowerkzeug als Reaktion auf den erfassten Parameter zu steuern, wenn bestimmte Schwellenwerte überschritten werden.

Ebenso soll in JP H0347249 A ein Überhitzen eines Halteteils für ein chirurgisches Instrument verhindert werden, indem zwischen zwei Enden eines Temperaturmesselements eine Spannung erzeugt wird, in ein digitales Signal umgewandelt und als Temperaturinformation in eine Steuerschaltung eingegeben wird. Bei Überschreitung eines bestimmten Temperaturschwellenwerts, wird entweder ein Alarm-Signal ausgegeben oder die Stromversorgung für einen Motor zum Antrieb des chirurgischen Instruments wird gestoppt.

US 5516285 A offenbart einen chirurgischen Bohrer mit einem Temperatursensor zum Erfassen und Messen der Temperatur an der Bohrerspitze. Eine Methode zur Messung der Temperatur der Bohrerspitze im Knochen eines Patienten wird ebenfalls offengelegt.

US 2009 259244 offenbart eine Stromversorgungsvorrichtung für zum Ausgeben von Strom an ein chirurgisches Instrument umfassend einen Temperaturerkennungsabschnitt zum Erkennen einer Temperatur des chirurgischen Instruments und einen Abnormalitätserkennungsabschnitt zum Erkennen einer Abnormalität des chirurgischen Instruments auf der Grundlage der erfassten Temperatur.

WO 2018 165390 offenbart ein Dentalbohrsystem mit elektrischer Impedanzmessung welches anzeigt, wenn sich ein Teil des Bohrersystems der Kortikalis-Spongiosa-Grenzfläche oder den Knochen-Weichgewebe-Grenzflächen nähert.

### Darstellung der Erfindung

Die Erfindung soll dazu beitragen, das Risiko von Brüchen und/oder Beschädigungen an rotierenden Instrumenten sowie den umgebenden Materialien zu verringern oder zu verhindern. Dazu ist es Aufgabe der Erfindung eine Überwachung von mechanischen und/oder thermischen Belastungen an rotierenden, im Besonderen modularen Instrumenten mithilfe eines Impedanzmessverfahrens zu ermöglichen. Die zu überwachenden Belastungen können thermisch, chemisch oder physikalisch induzierte Materialveränderungen sein.

Die Lösung der Aufgabe erfolgt mit den Merkmalen des Hauptanspruchs, wobei die Unteransprüche weitere Ausgestaltungen beschreiben.

Die erfindungsgemäße Vorrichtung zur Messung von mechanischen und thermischen Belastungen an einem rotierenden medizinischen Instrument umfasst ein endodontisches Handstück mit dem rotierenden medizinischen Instrument am distalen Ende des Handstücks. Erfindungsgemäß ist eine Impedanzeinheit mit dem rotierenden medizinischen Instrument über eine elektrische Kontaktierung zum medizinischen Instrument und mit einer Gegenelektrode elektrisch verbunden.

In einer Ausführung ist die Impedanzeinheit eine impedanzbasierte Mess-, Auswerte- und Regelungseinheit (iMAR-Einheit) mit einem integrierten Frequenzgenerator und einer Messeinheit.

In einer weiteren Ausführung ist die Impedanzeinheit in das Handstück integriert. Die Impedanzeinheit kann aber ebenso außerhalb des Handstücks angeordnet sein.

In einer weiteren Ausführung ist das rotierende medizinische Instrument ein Wurzelkanalinstrument, bevorzugt eine Wurzelkanalfeile oder ein Bohrer.

In einer weiteren Ausführung ist die elektrische Kontaktierung ein Schleifkontakt oder ein Gleitkontakt.

In einer weiteren Ausführung weist die Gegenelektrode eine größere Oberfläche als die Oberfläche des rotierenden Instruments auf.

In einer weiteren Ausführung ist die Gegenelektrode am Patienten oder am Behandlungsgerät oder am Behandler angeordnet.

Die Lösung der Aufgabe demnach erfolgt durch eine Echtzeit-Messung der Impedanz sowie deren Auswertung durch integrierte Elektronik. Als Beispiel dient hier das Verringern der Bruch- und Verklemmungsgefahr von Wurzelkanalfeilen durch zu starke thermische und/oder mechanische Belastung, um eine optimierte Behandlung von z.B. Zahnerkrankungen durchführen zu können.

Durch die direkte Ankopplung des rotierenden Antriebs mit der Impedanzmesstechnik soll bei drohender Überhitzung und/oder zu starker Biegung und/oder Materialveränderungen das aufgewendete Drehmoment auf das rotierende Instrument und/oder die Umdrehungszahl reduziert werden, um einen Bruch zu vermeiden.

Ein System, welches Echtzeit-Messungen der thermischen und/oder mechanischen Belastungen von rotierenden Instrumenten mittels Impedanzmessverfahren durchführt, existiert bisher nicht. Vor allem gibt es derzeit keine Systeme, welche die Impedanzmessung in Echtzeit während der Instrumentenrotation ermöglicht.

Bei derzeitigen rotierenden Systemen besteht die Gefahr eines Instrumentenbruchs oder Werkzeugbruches bei einer Wärmeentwicklung oder beim Verklemmen. Durch die integrierte Impedanzmesstechnik ist eine Abschaltung oder Reduzierung der Rotation des rotierenden Instrumentes nach zuvor definierten Kriterien möglich. Bisher ist solch eine Belastung in rotierenden Instrumenten direkt während der Behandlung nicht bestimmbar.

Durch die Erfindung kann das Problem von Feilen- oder Werkzeugbrüchen durch übermäßige thermische Belastungen und/oder Biegung des rotierenden Instruments, insbesondere von Wurzelkanalfeilen oder Bohrern reduziert werden.

Eine Anwendung stellt z.B. die Integration der Elektronik zur Impedanzmessung in das Handstück eines Wurzelkanalfeilen-Antriebs dar. Zudem kann in zahnmedizinischen Bohrern die elektrische Kontaktierung des rotierenden Instrumentes analog zur Wurzelkanalfeile im Bohrkopf erfolgen, wobei dies nicht durch die beanspruchte Erfindung umfasst ist. Damit ist es möglich, nicht nur während einer Zahnwurzelbehandlung, sondern auch bei Bohrvorgängen z.B. in der Zahnmedizin und orthopädischen Chirurgie die Impedanz zu messen und dadurch Rückschlüsse auf den thermischen Zustand der Feile bzw. des Bohrers zu ziehen. Bei übermäßiger Erwärmung wird dann z.B. das Drehmoment und/oder die Umdrehungszahl reduziert, um einen Bruch des Instruments und Schädigung des Gewebes durch überhöhte thermische Belastung zu verhindern.

### Ausführung der Erfindung

Die Erfindung wird anhand eines Ausführungsbeispiels erläutert. Hierzu zeigen
- Figur 1: eine erfindungsgemäße Vorrichtung zur Messung von mechanischen und thermischen Belastungen an einem rotierenden medizinischen Instrument in einer ersten Ausführungsform und
- Figur 2: eine weitere Ausführungsform der erfindungsgemäßen Vorrichtung.

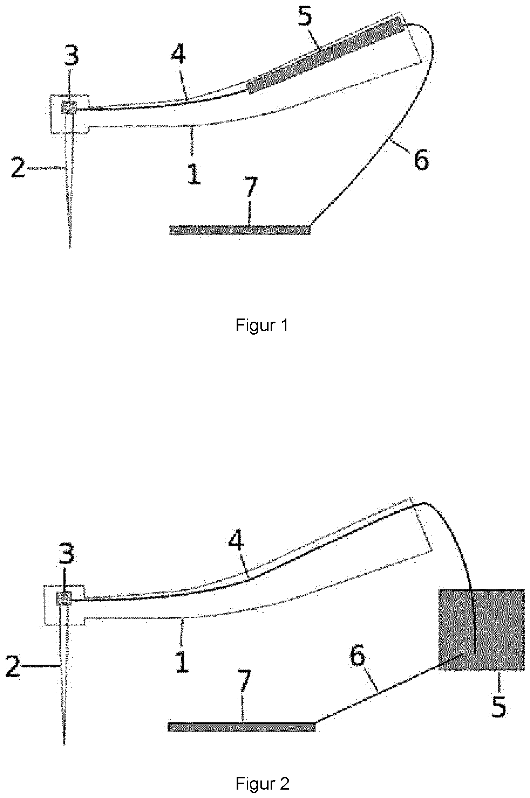

Die in Figur 1 gezeigte ersten Ausführungsform betrifft eine Vorrichtung zur Messung und Regelung von mechanischen und thermischen Belastungen an einem rotierenden, insbesondere medizinischen Instrument. Die Vorrichtung umfasst ein endodontisches Handstück 1, eine Impedanzeinheit 5, welche in diesem Ausführungsbeispiel in das Handstück 1 integriert ist, und eine Gegenelektrode 7. Die Impedanzeinheit 5 ist eine impedanzbasierte Mess-, Auswerte- und Regelungseinheit (iMAR-Einheit).

Das distale Ende des Handstücks 1 ist mit dem rotierenden Instrument 2, z.B. einem Wurzelkanalinstrument, insbesondere einer Wurzelkanalfeile oder einem Bohrer, verbunden. Eine elektrische Kontaktierung 3, beispielsweise ein Schleifkontakt, verbindet das rotierende Instrument 2 über eine elektrische Leitung 4 mit der Impedanzeinheit 5. Die Kontaktierung 3 zu den elektrisch leitenden Teilen kann beispielsweise über zwei Schleifkontakte, welche beide entweder ringförmig oder anders geformt am Schaft des rotierenden Instruments 2 angeordnet und zueinander isoliert sind, erfolgen oder die Kontaktierung 3 erfolgt anderer Art. Durch diese beispielhafte Anordnung steht die Kontaktierung 3 während der rotatorischen Bewegung des rotierenden Instruments 2 mit dem Handstück 1 in elektrischem Kontakt.

Die Impedanzeinheit 5 ist ihrerseits über eine weitere elektrische Leitung 6 mit der Gegenelektrode 7 verbunden. Die Gegenelektrode 7 wird am Patienten oder am Behandlungsgerät oder am Behandler selbst angebracht. Die Form der Gegenelektrode 7 ist unbestimmt. Die Größe der Oberfläche der Gegenelektrode 7 muss jedoch größer sein als die Oberfläche des rotierenden Instruments 2.

Figur 2 zeigt eine weitere Ausführungsform der erfindungsgemäßen Vorrichtung mit einem endodontischen Handstück 1, einer extern angeordneten Impedanzeinheit 5 und einer Gegenelektrode 7. Die elektrische Kontaktierung 3 zum rotierenden Instrument 2 (auch hier beispielhaft eine Wurzelkanalfeile), die Anordnung der Gegenelektrode 7 sowie die elektrischen Leitungen 4 und 6 sind entsprechend der Figur 1 vorgesehen.

Die Impedanzeinheit 5 ist sowohl in Figur 1 als auch in Figur 2 direkt an den rotierenden Antrieb des rotierenden Instruments 2 durch die elektrische Kontaktierung 3 angekoppelt. Dies ermöglicht es, die Impedanz in Echtzeit, während des Behandlungsablaufs zu messen und auszuwerten. Die zur Auswertung des Zustandes des rotierenden Instruments 2 herangezogene Impedanz ist die innere Impedanz des rotierenden Instruments 2 selbst und nicht die Impedanz der Umgebung. Die Impedanzeinheit 5 als eine impedanzbasierte Mess-, Auswerte- und Regelungseinheit beinhaltet eine integrierte elektronische Schaltung mit integriertem Frequenzgenerator und Messeinheit, welche die aufgenommenen Daten verarbeitet, die bei zuvor definierten Grenzwerten für Änderungen der inneren Impedanz bei einer thermischen und/oder mechanischen Belastung des rotierenden Instruments 2 dasselbe regelt. Die Grenzwerte resultieren aus der Echtzeit-Auswertung der gemessenen Impedanzspektren der inneren Impedanz des rotierenden Instruments 2 und definieren die Abschaltkriterien für eine zu hohe mechanische und/oder thermische Belastung des rotierenden Instruments 2. Gleichfalls kann der Phasenübergang im Instrumentenwerkstoff abhängig von dessen Temperatur bestimmt werden, was eine zusätzliche Verbesserung der Analysemethode bedeutet.

Beispielsweise wird der thermisch bedingte Phasenübergang des FGL-Materials (Formgedächtnislegierung-Material) innerhalb eines kleinen Frequenzfensters anhand einer charakteristischen Verschiebung der inneren Impedanz des rotierenden Instruments 2 ermittelt. Die Änderungen der Impedanz in anderen Frequenzbereichen und/oder des gesamten Spektrums werden ebenso zur Interpretation anderer belastungsrelevanter Parameter herangezogen. Z.B. wird die Steigung der Impedanz innerhalb eines definierten Frequenzbereiches in Echtzeit ausgewertet und es wird abhängig von der Steigung entsprechende Zustände des rotierenden Instruments 2 ermittelt. Weiterhin können mittels RCL-Ersatzschaltbilder aus Widerständen(R), Kondensatoren (C) und Spulen (L) theoretische Kurven erstellt werden, welche mit den Messkurven verglichen werden. Mit Hilfe der gemessenen Impedanzen können daraus relevante Parameter errechnet werden. Im Falle einer Überschreitung zuvor definierter Zielkriterien für eine thermische Belastung und/oder übermäßige Verformung wird das rotierende Instrument 2 abgeschaltet oder das aufgebrachte Drehmoment und/oder die Rotationsgeschwindigkeit reduziert. Dadurch kann eine Instrumentenüberhitzung und/oder Biegung und/oder Materialveränderungen mit daraus resultierender Bruch- oder Verklemmungsgefahr gezielt vermieden werden.

Beim Einsatz eines rotierenden Instruments 2, das modular auf ein Handstück 1 aufgesteckt wird, erfolgt die Kraftübertragung mittels Form- oder Kraftschluss. Dadurch ist es nur bedingt möglich, das rotierende Instrument 2 elektrisch zu kontaktieren. Die Kontaktierung erfolgt in diesem Fall über elektrische (Schleif-) Kontakte über die mit oder ohne Rotation des rotierenden Instruments 2 eine Impedanzmessung erfolgen kann. Dieser Kontakt kann dauerhaft oder zeitweise erfolgen.

Die Impedanzmessung wird auf wesentliche Messpunkte beschränkt, um dadurch die Effizienz der Messungen zu erhöhen sowie die Energieaufnahme der benötigten Elektronik zu reduzieren. Die Messpunkte sind innerhalb des Frequenzbereiches der Impedanzmessung. Außer Messpunkte können auch Messbereiche genutzt werden, d.h. es wird ein Spektrum über einen kleinen Frequenzbereich gemessen und diese Werte werden zur Auswertung herangezogen. Das entsprechende Ersatzschaltbild hängt von der jeweiligen Verwendung ab. Für unterschiedliche Einsatzzwecke werden unterschiedliche Ersatzschaltbilder zur Auswertung herangezogen.

### Bezugszeichen

- 1: Handstück
- 2: Wurzelkanalfeile
- 3: elektrische Kontaktierung
- 4: elektrische Leitung
- 5: Impedanzeinheit
- 6: elektrische Leitung
- 7: Gegenelektrode

## Patentansprüche

1. Vorrichtung zur Messung von mechanischen und thermischen Belastungen an einem rotierenden medizinischen Instrument (2), wobei die Vorrichtung ein endodontisches Handstück (1) mit dem rotierenden medizinischen Instrument (2) am distalen Ende des Handstücks (1) umfasst, wobei eine Impedanzeinheit (5) mit dem rotierenden medizinischen Instrument (2) über eine elektrische Kontaktierung (3) zum medizinischen Instrument (2) und mit einer Gegenelektrode (7) elektrisch verbunden ist.

2. Vorrichtung nach Anspruch 1, **dadurch gekennzeichnet, dass** die Impedanzeinheit (5) eine impedanzbasierte Mess-, Auswerte- und Regelungseinheit (iMAR-Einheit) mit einem integrierten Frequenzgenerator und einer Messeinheit ist.

3. Vorrichtung nach Anspruch 1 oder 2, **dadurch gekennzeichnet, dass** die Impedanzeinheit (5) in das Handstück (1) integriert ist

4. Vorrichtung nach Anspruch 1, **dadurch gekennzeichnet, dass** das rotierende medizinische Instrument (2) ein Wurzelkanalinstrument, bevorzugt eine Wurzelkanalfeile oder ein Bohrer ist.

5. Vorrichtung nach Anspruch 1, **dadurch gekennzeichnet, dass** die elektrische Kontaktierung (3) ein Schleifkontakt oder ein Gleitkontakt ist.

6. Vorrichtung nach Anspruch 1, **dadurch gekennzeichnet, dass** die Gegenelektrode (7) eine größere Oberfläche als die Oberfläche des rotierenden Instruments (2) aufweist.

7. Vorrichtung nach Anspruch 1 oder 6, **dadurch gekennzeichnet, dass** die Gegenelektrode (7) am Patienten oder am Behandlungsgerät oder am Behandler anordenbar ist.

## Claims

1. Device for measuring mechanical and thermal loads on a rotating medical instrument (2), the device comprising an endodontic handpiece (1) with the rotating medical instrument (2) at the distal end of the handpiece (1), with an impedance unit (5) being electrically connected to the rotating medical instrument (2) via an electrical contact (3) to the medical instrument (2) and electrically connected to a counter electrode (7).

2. Device according to Claim 1, **characterized in that** the impedance unit (5) is an impedance-based measurement, evaluation and control unit (iMAR unit) having an integrated frequency generator and a measuring unit.

3. Device according to Claim 1 or 2, **characterized in that** the impedance unit (5) is integrated in the handpiece (1).

4. Device according to Claim 1, **characterized in that** the rotating medical instrument (2) is a root canal instrument, preferably a root canal file or a dental drill.

5. Device according to Claim 1, **characterized in that** the electrical contact (3) is a sliding contact or a sliding-action contact.

6. Device according to Claim 1, **characterized in that** the counter electrode (7) has a larger surface than the surface of the rotating instrument (2).

7. Device according to Claim 1 or 6, **characterized in that** the counter electrode (7) is arrangeable on the patient or on the treatment equipment or on the practitioner.

## Revendications

1. Dispositif permettant de mesurer des contraintes mécaniques et thermiques au niveau d'un instrument médical rotatif (2), dans lequel le dispositif comprend une pièce à main endodontique (1) pourvue de l'instrument médical rotatif (2) à l'extrémité distale de la pièce à main (1), dans lequel une unité à impédance (5) est reliée électriquement à l'instrument médical rotatif (2) par l'intermédiaire d'une mise en contact électrique (3) avec l'instrument médical (2) et à une contre-électrode (7).

2. Dispositif selon la revendication 1, **caractérisé en ce que** l'unité à impédance (5) est une unité de mesure, d'évaluation et de régulation à base d'impédance (unité iMAR) munie d'un générateur de fréquence intégré et d'une unité de mesure.

3. Dispositif selon la revendication 1 ou 2, **caractérisé en ce que** l'unité à impédance (5) est intégrée dans la pièce à main (1).

4. Dispositif selon la revendication 1, **caractérisé en ce que** l'instrument médical rotatif (2) est un instrument pour canal radiculaire, de préférence une lime pour canal radiculaire ou une fraise.

5. Dispositif selon la revendication 1, **caractérisé en ce que** la mise en contact électrique (3) est un contact frottant ou un contact glissant.

6. Dispositif selon la revendication 1, **caractérisé en ce que** la contre-électrode (7) présente une plus grande surface que la surface de l'instrument rotatif (2) .

7. Dispositif selon la revendication 1 ou 6, **caractérisé en ce que** la contre-électrode (7) peut être disposée chez le patient ou sur l'appareil de traitement ou chez le praticien.
